# FASCICULE DE BREVET EUROPEEN

(11) **EP 1 360 101 B1**
(45) Date de publication et mention de la délivrance du brevet: **20.08.2008**
(21) Numéro de dépôt: 02706829.5
(22) Date de dépôt: 25.01.2002
(51) Int. Cl.: B60T 13/575

(54) **DISPOSITIF DE REACTION POUR SERVOMOTEUR D'ASSISTACE AU FREINAGE**
REAKTIONSVORRICHTUNG FÜR BREMSKRAFTVERSTÄRKER
REACTION DEVICE FOR BRAKE BOOSTER

(30) Priorité: 07.02.2001 FR 0102105
(43) Date de publication de la demande: 12.11.2003
(73) Titulaire: BOSCH SISTEMAS DE FRENADO, S.L., 08080 Barcelona 6 (ES)
(72) Inventeur: SACRISTAN, Fernando, E-08348 Barcelone (ES); SIMON BACARDIT, Juan, E-08013 Barcelone (ES); BERTHOMIEU, Bruno, E-08013 Barcelone (ES)
(74) Mandataire: Hurwic, Aleksander Wiktor
(86) Numéro de dépôt international: PCT/FR2002/000321
(87) Numéro de publication internationale: WO 2002/062643

(56) Documents cités:
- US-A- 5 884 548
- PATENT ABSTRACTS OF JAPAN vol. 1998, no. 14, 31 décembre 1998 (1998-12-31) & JP 10 230841 A (NABCO LTD), 2 septembre 1998 (1998-09-02)
- PATENT ABSTRACTS OF JAPAN vol. 1999, no. 13, 30 novembre 1999 (1999-11-30) & JP 11 208456 A (NABCO LTD), 3 août 1999 (1999-08-03)

## Description

La présente invention se rapporte principalement à un dispositif de réaction pour servomoteur pneumatique d'assistance au freinage à assistance modulable et un servomoteur d'assistance au freinage comportant un tel dispositif.

Un servomoteur pneumatique d'assistance au freinage est utilisé dans un système de freinage afin d'amplifier de manière pneumatique la force musculaire appliquée sur une pédale de frein. Le servomoteur est disposé entre la pédale de frein et un maître-cylindre, par exemple un maître-cylindre tandem.

Il comporte une enveloppe divisée en deux chambres par une paroi mobile étanche, cette paroi étant déplaçable par un différentiel de pression entre les deux chambres. La paroi mobile comporte un piston pneumatique s'étendant radialement vers l'extérieur par un- jupe sertie sur la périphérie externe du piston. Le différentiel de pression entre les deux chambre est contrôlé par une valve trois voies assujettie au déplacement d'une tige d'actionnement commandée par une pédale de frein. Cette valve trois voies est disposée dans la partie cylindrique arrière du piston pneumatique.

L'action de la tige d'actionnement est transmise aux pistons d'un maître-cylindre au moyen d'une tige de poussée par l'intermédiaire d'un disque de réaction réalisé en un matériau élastomère par exemple le caoutchouc. Le disque de réaction est un moyen de composer trois forces, une première force provenant de la tige d' actionnement appliquée par l'intermédiaire d'un distributeur plongeur fixe par rapport à la tige d'actionnement, la seconde force provenant de l'assistance fournie par le piston pneumatique du fait du déplacement de la paroi mobile par le différentiel de pressions, et le troisième force étant la réaction du circuit hydraulique de freinage transmise par la tige de poussée. Ce disque permet au conducteur du véhicule de pouvoir ajuster son action sur la pédale de frein par un retour d'informations du circuit hydraulique.

On appellera force d'entrée, la force appliquée par le conducteur à la pédale; force d'actionnement, la force appliquée par la tige d'actionnement; et force de sortie; la force qu'exercée par la tige de poussée sur un piston de maître-cylindre, par exemple un maître-cylindre tandem.

Grâce à ce type de servomoteur d'assistance au freinage on obtient une relation sensiblement affine entre la force d'entrée et la force de sortie sur un certain intervalle de valeurs de forces d'entrée.

Il existe des dispositifs permettant de faire varier l'assistance du servomoteur, c'est-à-dire de faire varier le rapport entre la force d'entrée et la force de sortie, par exemple de manière à augmenter l'assistance à partir d'une certaine force d'entrée. Le brevet FR 0015943 décrit un dispositif appliqué dans la partie cylindrique arrière du piston pneumatique, le distributeur est composé de deux parties, un plongeur du côté de la tige d'actionnement et un palpeur du côté du disque de réaction, un ressort précontraint dans une cage déformable est appliquée entre le palpeur et le plongeur.

Pour une force d'actionnement inférieure à la précontrainte du ressort, le palpeur et le plongeur se comporte comme une pièce rigide. Pour une force d'entrée suffisante, le ressort se comprime, le palpeur est alors mobile axialement vers la pédale de frein permettant au disque de réaction de s'extruder en direction de la pédale de frein. Il y a alors réduction de la force de réaction transmise à la tige d'actionnement, ce qui augmente le rapport d'assistance.

Cependant ce dispositif implique des modification importantes de la structure interne du servomoteur du fait de son encombrement, alors que pour des raisons de coûts les équipementiers cherchent à standardiser leurs produits. De plus, ils cherchent également à réduire les tailles des servomoteurs.

Par conséquent c'est un but de la présente invention d'offrir un dispositif à réaction adaptable sur un servomoteur pneumatique de type connu.

C'est également un but de la présente invention d'offrir un dispositif de réaction de taille réduite

C'est également un but de la présente invention d'offrir un servomoteur pneumatique d'assistance au freinage permettant un rapport d'assistance modulable et ayant un corps de piston standard.

C'est également un but de la présente invention d'offrir un servomoteur pneumatique d'assistance au freinage permettant un rapport d'assistance modulable à un faible coût.

C'est également un but de la présente invention d'offrir un servomoteur pneumatique d'assistance au freinage permettant un rapport d'assistance modulable de taille réduite.

C'est également un but de la présente invention d'offrir un servomoteur pneumatique d'assistance au freinage permettant un niveau d'assistance modulable de conception et de fabrication simple.

La présente invention permet avantageusement d'être montée de manière simple sur des pistons pneumatiques de servomoteurs de forme standard.

La présente invention a également pour avantage d'être de conception simple et d'un faible coût de fabrication.

La présente invention a également pour avantage d'être d'un encombrement réduit.

Ainsi ces buts sont atteints par un dispositif de réaction selon la présente invention comportant un logement dans lequel est disposé un disque de réaction en matériaux incompressibles ou sensiblement incompressibles délimité :
a) à une première extrémité longitudinale par une première surface ;
b) à une seconde extrémité opposée à la première extrémité, par une seconde surface radialement externe d'application du piston pneumatique et une troisième surface d'application du plongeur délimitée par la seconde surface;
c) par une quatrième surface radiale s'étendant de la première surface à la seconde et troisième surfaces.

Le dispositif de réaction comporte également au moins un moyen élastique susceptible d'être déformé, et des moyens de précontraintes du moyen élastique, le moyen élastique permettant pour une certaine valeur de force d'entrée supérieure à une certaine valeur fixée une augmentation du volume disponible pour le disque de réaction s'effectuant dans un ensemble de la première et de la seconde surfaces.

La présente invention a principalement pour objet un dispositif de réaction pour servomoteur d'assistance au freinage comportant un disque de réaction disposé dans un logement de réception délimité à une première extrémité longitudinale par une première surface , à une seconde extrémité opposée à la première extrémité par une seconde surface radialement externe et une troisième surface délimitée par ladite deuxième surface, par une quatrième surface radiale s'étendant axialement de la première surface à la seconde et troisième surfaces, ledit dispositif de réaction comportant également au moins un moyen élastique susceptible d'être déformé et permettant une augmentation du volume disponible dudit disque de réaction pour une force d'entrée supérieure à une certaine valeur de force et déterminant un premier rapport d'assistance pour une force d'entrée inférieure à la valeur prédéterminée caractérisé en ce que l'augmentation du volume disponible pour ledit disque de réaction s'effectue dans un ensemble de la première et de la quatrième surfaces et en ce que ledit dispositif de réaction détermine au moins un second rapport d'assistance pour une valeur de force d'entrée supérieure à la valeur prédéterminée.

La présente invention a également pour objet un dispositif de réaction caractérisé en ce que la quatrième surface est au moins partiellement définie par une extrémité radiale de ladite tige de poussée.

La présente invention a également pour objet un dispositif de réaction caractérisé en ce que la première surface est définie par une rondelle annulaire et au moins une pièce flottante.

La présente invention a également pour objet un dispositif de réaction caractérisé en ce que la première surface est formée par une pièce solidaire d'une extrémité axiale de la tige de poussée.

La présente invention a également pour objet un dispositif de réaction caractérisé en ce que le moyen élastique au nombre d'au moins un est précontraint de manière à assurer une rigidité du dispositif de réaction pour une force d'entrée inférieure à une certaine valeur de force.

La présenté invention a également pour objet un dispositif de réaction **caractérisé en ce que** ledit dispositif de réaction assure une modification du rapport d'assistance en fonction de la valeur de la force d'entrée.

La présente invention a également pour objet un dispositif de réaction **caractérisé en ce que** ledit dispositif assure une augmentation du rapport d'assistance pour une valeur de force d'actionnement supérieure à une certaine valeur de force.

La présente invention a également pour objet un dispositif de réaction **caractérisé en ce que** la précontraintes des moyens élastiques est supérieure ou égale à 150 Newtons.

La présente invention a également pour objet un dispositif de réaction **caractérisé en ce que** le moyen élastique est un ressort.

La présente invention a également pour objet un dispositif de réaction **caractérisé en ce que** le moyen élastique est un ressort cylindrique.

La présente invention a également pour objet un dispositif de réaction **caractérisé en ce que** le moyen élastique est un anneau élastique.

La présente invention a également pour objet un dispositif de réaction **caractérisé en ce que** le moyen élastique est un ressort conique

La présente invention a également pour objet un dispositif de réaction **caractérisé en ce que** la rondelle annulaire et la pièce flottante au nombre d'au moins une forment des moyens de précontrainte du moyen élastique au nombre d'au moins un.

La présente invention a également pour objet un dispositif de réaction **caractérisé en ce que** la rondelle annulaire est sertie sur le corps de la tige de poussée.

La présente invention a également pour objet un dispositif de réaction **caractérisé en ce que** la pièce flottante comporte des moyens de centrage du moyen élastique.

La présente invention a également pour objet un dispositif de réaction **caractérisé en ce qu**'il comporte deux moyens élastiques coaxiaux.

La présente invention a également pour objet un dispositif de réaction **caractérisé en ce que** le moyen élastique a une précharge inférieure à la précharge du moyen élastique.

La présente invention a également pour objet un dispositif de réaction **caractérisé en ce que** la pièce flottante comporte une première pièce centrale et une seconde pièce annulaire mobiles axialement l'une par rapport à l'autre.

La présente invention a également pour objet un dispositif de réaction **caractérisé en ce qu**'il comporte des moyens de guidage susceptibles de coopérer avec des moyens de guidage d'un servomoteur pneumatique d'assistance au freinage.

La présente invention a également pour objet un servomoteur pneumatique d'assistance au freinage comportant une enveloppe divisée en deux chambres par une paroi mobile étanche comportant un piston pneumatique dans lequel est disposé une valve trois voies actionnée par une tige d'actionnement susceptible d'être reliée à une première extrémité longitudinale à une pédale de frein et à une seconde extrémité longitudinale opposée à la première extrémité à un distributeur, caractérisé en ce que le distributeur est susceptible de venir en contact avec un dispositif de réaction tel que défini précédemment.

La présente invention a également pour objet un servomoteur pneumatique d'assistance au freinage caractérisé en ce que ledit dispositif de réaction défini précédemment est fixé au piston pneumatique au moyen d'une rondelle.

La présente invention a également pour objet un servomoteur pneumatique d'assistance au freinage caractérisé en ce que la rondelle est fixée par pincement entre un ressort de rappel et le piston pneumatique.

La présente invention a également pour objet un servomoteur pneumatique d'assistance au freinage caractérisé en ce que le piston pneumatique comporte des moyens de guidage coopérant avec des moyens de guidage du dispositif de réaction défini précédemment.

La présente invention sera mieux comprise à l'aide la description suivante et des figures annexées sur lesquelles l'avant et l'arrière sont respectivement représentés par les parties gauche et droite des figures, et sur lesquelles :
La figure 1 est une vue en coupe longitudinale d'un servomoteur pneumatique d'assistance au freinage de type connu ;
La figure 2 est une courbe représentant la variation de la force sortie du servomoteur en fonction de la force d'entrée pour un servomoteur du type à double rapport d'assistance ;
La figure 3 est une vue en coupe longitudinale d'un servomoteur pneumatique d'assistance au freinage comportant une première variante d'un dispositif de réaction selon la présente invention ;
La figure 4 est un vue de détail du dispositif de réaction de la figure 3 ;
La figure 5 est une vue en coupe longitudinal d'une deuxième variante du premier mode de réalisation d'un dispositif de réaction susceptible d'être mis en oeuvre dans un servomoteur selon la présente invention;
La figure 6 est une vue en coupe longitudinal d'une troisième variante du premier mode de réalisation d'un dispositif de réaction susceptible d'être mis en oeuvre dans un servomoteur selon la présente invention ;
La figure 7 est une vue en coupe longitudinal d'une quatrième variante du premier mode de réalisation d'un dispositif de réaction susceptible d'être mis en oeuvre dans un servomoteur selon la présente invention ;
La figure 8 est une vue en coupe longitudinal d'un troisième mode de réalisation d'un dispositif de réaction susceptible d'être mis en oeuvre dans un servomoteur selon la présente invention ;
La figure 9 est une vue en coupe longitudinal d'un troisième mode de réalisation d'un dispositif de réaction susceptible d'être mis en oeuvre dans un servomoteur selon la présente invention ;
La figure 10 est une courbe représentant la variation de la force de sortie en fonction de la force d'entrée pour un servomoteur pneumatique d'assistance au freinage comportant le dispositif de réaction de la figure 9 ;
La figure 11a est une vue en coupe longitudinal d'un quatrième mode de réalisation d'un dispositif de réaction susceptible d'être mis en oeuvre dans un servomoteur selon la présente invention ;
La figure 11b est une vue en perspective de trois quart avant du logement du disque de réaction du dispositif de réaction selon la figure 11a ;
La figure 12a représente des courbes de variation de la force d'actionnement en fonction de la compression du moyen élastique pour trois forces de poussée différentes et trois diamètres de disque de réaction différents à module d'Young du disque de réaction fixé ;
La figure 12b représente des courbes de variation de la force d'actionnement en fonction de la compression du moyen élastique pour trois forces de poussée différentes et trois diamètres de disque de réaction différents à module d'Young du disque de réaction fixé, différent de celui utilisé pour les mesures représentés sur les courbes 12a .

Les même références sont utilisées pour toutes les figures pour les mêmes pièces ou pour des pièces remplissant la même fonction.

L'ensemble des éléments décrits sont des pièces de révolution d'axe de symétrie XX'.

Le terme d'extrusion est entendu dans la présente description comme une opération élastique, à la fin de laquelle le disque de réaction qui sera défini par la suite revient dans sa forme initiale.

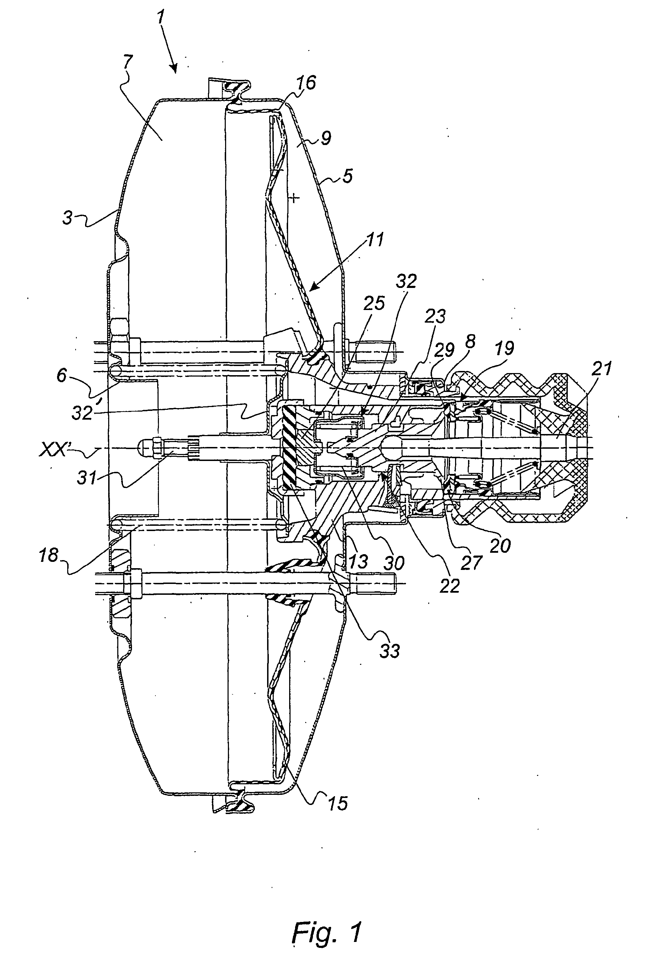

Sur la figure 1, on peut voir un servomoteur pneumatique d'assistance au freinage de type connu, comportant une enveloppe 1 formé par une première 3 et une seconde 5 coquilles serties de manière étanche l'une à l'autre et comportant chacune une ouverture centrale 6, 8 en regard l'une de l'autre, l'espace intérieur délimité par l'enveloppe 1 étant divisé en une chambre avant 7 et une chambre de travail 9 par une paroi mobile étanche 11. Cette paroi 11 est muni dans sa partie centrale d'un piston pneumatique 13 s'étendant axialement vers l'arrière et dans sa partie radialement externe d'une jupe 15 sertie sur la périphérie externe du piston 13. L'étanchéité de la paroi 11 est réalisée au moyen d'une membrane déroulante 16, par exemple réalisée en élastomère, et fixée sur la périphérie du piston 13 et sur la périphérie de l'enveloppe 1. Un ressort 18 est monté en compression entre la face arrière de la coquille 3 et la face avant du piston 13 afin d'assurer le retour de la paroi en position reculée en phase de repos.

La chambre avant 7 est reliée par des moyens étanches (non représentés) à une source de dépression. Au repos la chambre de travail 9 est en communication avec la chambre avant 7, tandis qu'au moment du freinage elle est susceptible d'être mise en communication avec un environnement à pression atmosphérique.

Les communications entre les deux chambres et avec l'environnement sont réalisées au moyen d'une valve trois voies 19 disposée dans la partie arrière cylindrique du piston pneumatique 13. La valve 19 comporte un siège de clapet 20 porté par une tige d'actionnement 21 reliée à une pédale de frein (non représentée), un distributeur plongeur 22 comprenant un plongeur 23 et un palpeur 25, le plongeur 23 recevant dans son extrémité arrière une extrémité avant de la tige d'actionnement 21 opposée à la pédale de frein et portant un premier clapet 27.
Un deuxième clapet 29 est formé par la périphérie arrière du piston pneumatique 13. Le palpeur et le plongeur sont reliés par un ressort 30 montée en compression dans une cage 32 déformable et de diamètre intérieur supérieur au diamètre extérieur du palpeur et du plongeur. La cage 32 comporte une premier manchon orienté vers l'arrière fixé au palpeur, avantageusement à force et un second manchon de plus petite taille en vis à vis du premier manchon fixé sur le plongeur, avantageusement à force.

Le servomoteur comporte également une tige de poussée 31, actionnant un piston d'un maître-cylindre (non représentés) fixé en avant du servomoteur au moyen d'une rondelle 32' pincée entre le ressort 18 et la face avant du piston 13, et portant dans son extrémité axiale arrière orientée vers la pédale de frein formant coupelle un disque de réaction 33 susceptible au freinage de coopérer avec la face avant du palpeur 25, le disque de réaction 33 est réalisé en un matériau déformable, sensiblement incompressible, par exemple en élastomère et de préférence en caoutchouc.

Un servomoteur d'assistance pneumatique au freinage est de manière connue caractérisé par un rapport d'assistance égal au rapport de la force de sortie (Fs) et de la force d'entrée (Ft) et qui se détermine par les rapports des surfaces du disque de réaction 33 et du palpeur 25.

Pour des raisons évidentes de sécurité, on souhaite augmenter ce rapport d'assistance lors d'une action de freinage avec une force d'entrée supérieure à une valeur déterminée, correspondant à une situation d'urgence afin de surassister l'action du conducteur sur la pédale de frein

Le servomoteur est alors caractérisé par un premier et au moins un second rapports d'assistance.

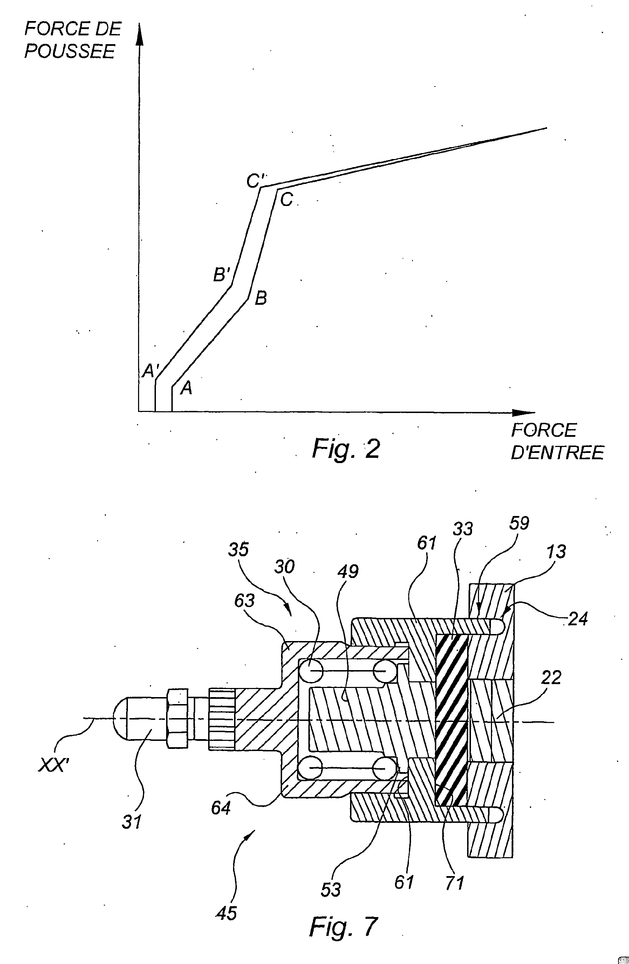

Nous allons maintenant expliquer le fonctionnement du servomoteur de type connu en se référant aux figures 1 et 2.

Au repos , la chambre avant 7 et la chambre de travail 9 sont en communication et soumise à la dépression de la chambre avant 7.

Lors du freinage, l'action du conducteur sur la pédale de frein provoque le déplacement de la tige d'actionnement, provoquant la fermeture de la communication entre les chambres 7 et 9 par application du second clapet 29 sur le siège de clapet 20 et par ouverture de la communication entre la chambre de travail et l'environnement à pression atmosphérique par levée du premier clapet 27 du siège de clapet 20. Il y a alors apparition d'une différence de pression entres la chambre avant 7 et de travail 9, ce qui a pour effet d'emporter la paroi 11 en direction du maître-cylindre. Le distributeur 22 formé du palpeur 25 et du plongeur 23 se comporte comme une pièce rigide, le disque de réaction 33 compose la force appliquée par la tige d'actionnement 21 par l'intermédiaire du palpeur 25, la force d'assistance appliquée par le piston pneumatique et la réaction du circuit hydraulique transmise par la tige de poussée 31. Le servomoteur fournit un premier rapport d'assistance (AB).

Pour une force d'entrée suffisante, le ressort 30 se comprime, le palpeur 25 est alors mobile par rapport au plongeur 24 en direction de la pédale de frein, permettant au disque de réaction 33 de s'extruder en direction de la pédale de frein.

Il y alors une modification de la distribution des pressions de contact dans la surface du caoutchouc, réduisant la pression de contact entre le distributeur 22 et le disque de réaction 33, correspondant à un second rapport d'assistance (BC).

A la fin de la phase de freinage, la tige d'actionnement 31 se déplace vers l'arrière permettant à l'ensemble du servomoteur de revenir dans sa position de repos, en particulier le disque de réaction reprend sa forme initiale.

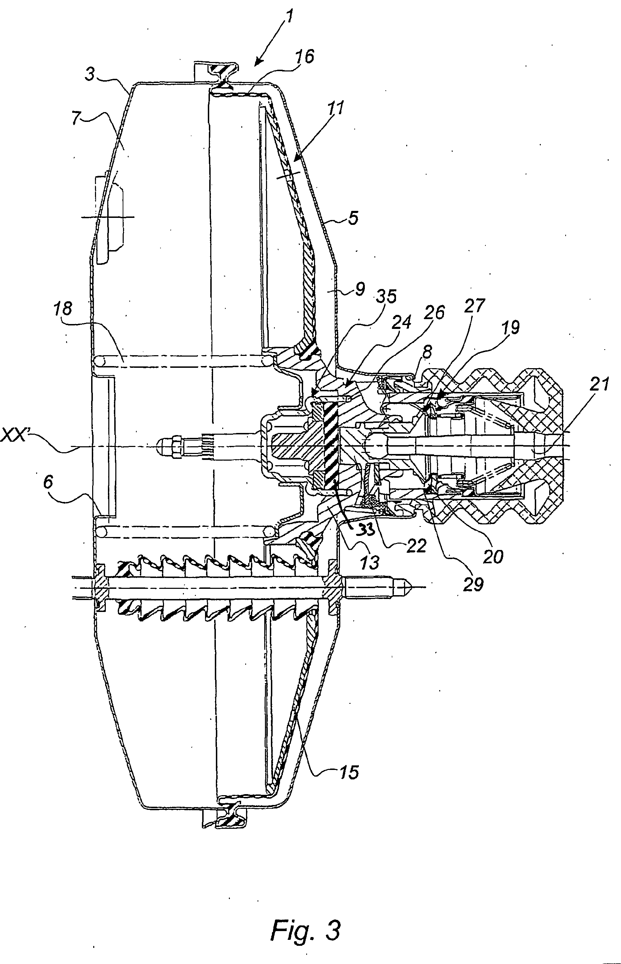

Sur la figure 3, on peut voir un servomoteur d'assistance au freinage équipé d'un dispositif de réaction selon un premier mode de réalisation de la présente invention, comportant une enveloppe 1 formée par une première 3 et une seconde 5 coquilles comportant respectivement des ouvertures centrales 6, 8 et divisée en deux chambres 7, 9 par une paroi mobile étanche 11. La paroi mobile 11 comporte dans sa partie centrale un piston pneumatique 13 s'étendant axialement vers l'arrière et dans sa partie radialement externe une jupe rigide 15 sertie sur la périphérie externe du piston 13, l'étanchéité étant réalisée au moyen d'une membrane déroulante 16 fixé hermétiquement à l'enveloppe 1 et au piston pneumatique 13.
Un ressort 18 est monté en compression entre la face arrière de la coquille 3 et la face avant du piston 13 afin d'assurer son retour lors du repos.
La chambre avant 7 est reliée par des moyens étanches (non représentés) à une source de dépression.

Une valve trois voies 19 est disposée dans la partie cylindrique du piston pneumatique 13 et est commandée au moyen d'une tige de commande 21 reliée à une pédale de frein (non représentée). Elle comporte un siège de clapet 20 porté par la tige d'actionnement 21 et formé par une surface annulaire, un ressort est monté en compression en appui sur la face arrière du clapet 20 afin d'assurer l'application du siège de clapet 20 sur des clapets 27, 29.

L'action de la tige d'actionnement 21est transmis au circuit hydraulique de freinage au moyen d'un dispositif de réaction 35 et d'un distributeur plongeur 22 coaxial à la tige d'actionnement 21 recevant dans une ouverture arrière de forme sensiblement tronconique l'extrémité avant de la tige d'actionnement 21. Cette extrémité arrière formant un premier clapet 27.

Le piston pneumatique 13 comporte une extrémité cylindrique arrière formant un second clapet 29 et dans sa face avant des moyens de guidage axial 24 susceptibles de coopérer avec des moyens de guidage axial du dispositif de réaction 35, avantageusement formés par une encoche radiale 26.

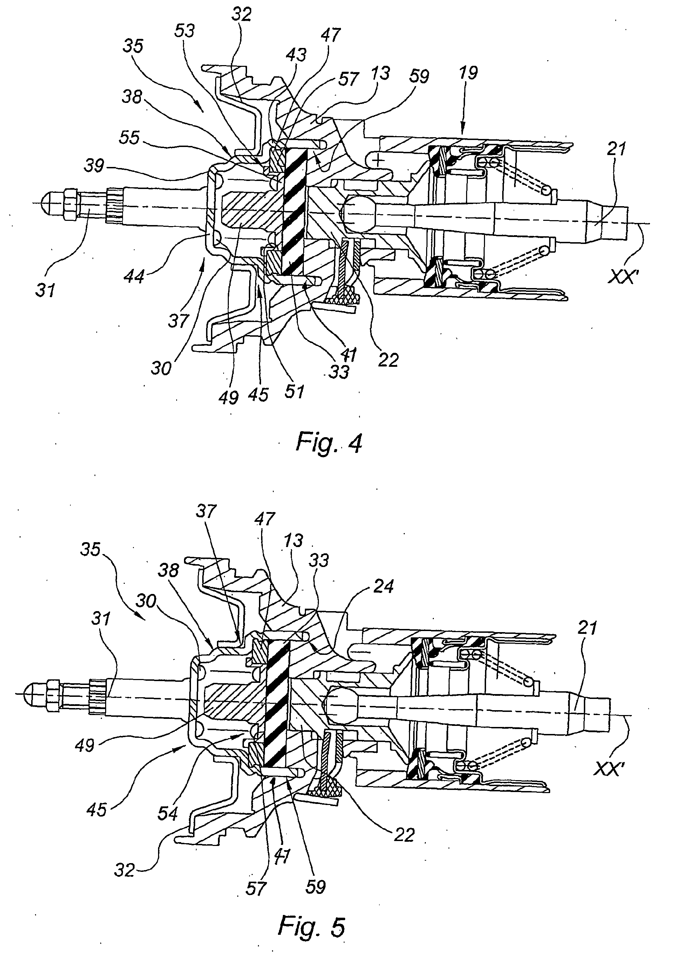

Sur les figure 4 et 5 on peut voir deux variantes d'un premier mode de réalisation d'un dispositif de réaction du servomoteur de la figure 3 comportant un moyen élastique 30, des moyens de précontraintes 45 du moyen élastique 30 et un disque de réaction 33. Les moyens de précontrainte 45 comporte une cage 37 formée par un manchon 38, une rondelle annulaire 47 et une pièce flottante 49. Le manchon 38 comporte à une première extrémité orientée vers l'avant un premier manchon de plus petit diamètre 39, et à une seconde extrémité orientée vers l'arrière un second manchon de plus grand diamètre 41 relié au premier manchon 39 par un épaulement 43, l'extrémité axiale avant du premier manchon de plus petit diamètre 39 étant fermé et formant embase d'une tige de poussée 31 coaxiale à la tige d'actionnement 21, le manchon 38 et la tige de poussée 31 étant coaxiaux.

La rondelle annulaire 47 coaxiale à la tige de poussée 31 est montée fixe dans le second manchon 41, en appui sur l'épaulement 43 et avantageusement sertie sur la surface radial interne du manchon 39. La pièce flottante 49 est montée en translation axiale dans le passage 51 pratiquée dans la rondelle 47, avantageusement montée coaxialement au distributeur plongeur 22 et de diamètre extérieur égal au diamètre intérieur du passage 51.

La pièce flottante 49 comporte des moyens de retenue 53 situés à une distance non nulle des extrémités axiales de la pièce 49, formés avantageusement par un collet 55 s'étendant radialement vers l'extérieur et de diamètre extérieur supérieur au diamètre intérieur de l'ouverture 51. Dans la deuxième variante du premier mode réalisation représenté à la figure 5, les moyens de retenues 53 comportent également des moyens de centrage 54 du ressort 30 formés par un renfoncement annulaire 54 pratiqué dans la face avant du collet 55.

Le moyen élastique 30, avantageusement un ressort est monté en compression entre la face orientée vers l'arrière du manchon 39 et la face annulaire avant du collet 55.

Le disque de réaction est disposé en appui sur une face 57 formé par la face orientée vers l'arrière de la rondelle annulaire 47 et par la face orientée vers l'arrière de la pièce flottante 49.

La dimension axiale du manchon de plus grand diamètre 41 est supérieur à la somme des dimensions axiales de la rondelle 47 et du disque de réaction 33 laissant une extrémité axiale arrière libre du manchon 41 formant les moyens de guidage 59 du dispositif de réaction 35 susceptible de coopérer avec les moyens de guidage 24 d'un piston pneumatique d'un servomoteur.

Le dispositif de réaction est fixé au piston pneumatique 13 au moyen d'une rondelle 32 annulaire dont le passage centrale s'étend avantageusement axialement vers l'avant sous forme d'un manchon bordant le manchon de plus petit diamètre 39 du manchon 37.

Nous allons décrire le fonctionnement du servomoteur pneumatique d'assistance au freinage comportant le dispositif 35 selon la présente invention.

Au repos, les chambres 7 et 9 sont soumises à la dépression.

Lors du freinage, l'action sur la pédale de frein déplace la tige d'actionnement qui provoque la fermeture de la communication entre la chambre avant 7 et la chambre de travail 9 par application du second clapet 29 sur le siège de clapet 20, puis l'ouverture de la communication entre la chambre de travail 9 et l'environnement à pression atmosphérique par levée du premier clapet 27 par rapport au siège 20. Le piston 13 est alors emporté par la différence de pressions entre les deux chambres 7, 9 vers l'avant.
Le disque de réaction 33 reçoit alors la force d'actionnement Fa de la tige d'actionnement par l'intermédiaire du distributeur 22, la force d'assistance Fp du piston pneumatique 13 qui peut effectivement se déplacer par rapport au disque de réaction grâce à l'encoche radiale 24 et la force de réaction Fr du circuit hydraulique de freinage.
Pour une force d'entrée inférieure à une certaine force d'entrée Fe, le moyen de réaction 35 se comporte comme une pièce rigide, le dispositif de réaction déterminant un premier rapport d'assistance.
Pour une force d'entrée supérieure à la valeur de la force Fe, le ressort 30 se comprime permettant à la pièce flottante 49 de coulisser vers l'avant, le disque de réaction 33 s'extrude alors vers l'avant dans l'ouverture 51. Il y alors une modification de la distribution des pressions de contact dans la surface du caoutchouc, réduisant la pression de contact entre le distributeur 22 et le disque de réaction 33, et le dispositif de réaction déterminant un second rapport d'assistance. Pour une valeur de la force d'entrée encore supérieure, la pièce flottante 49 vient en appui contre la tige de poussée 31, et le servomoteur fournit alors un rapport d'assistance égal au premier rapport d'assistance obtenu pour une force d'entrée inférieure à Fe.

La variation du rapport d'assistance dépend du module élastique du caoutchouc formant le disque de réaction ainsi que de la géométrie du disque de réaction et du logement du disque de réaction.

A la fin de la phase de freinage, la tige d'actionnement 21 se déplace vers l'arrière permettant à l'ensemble du servomoteur de revenir dans sa position de repos, en particulier le disque de réaction reprend sa forme initiale.

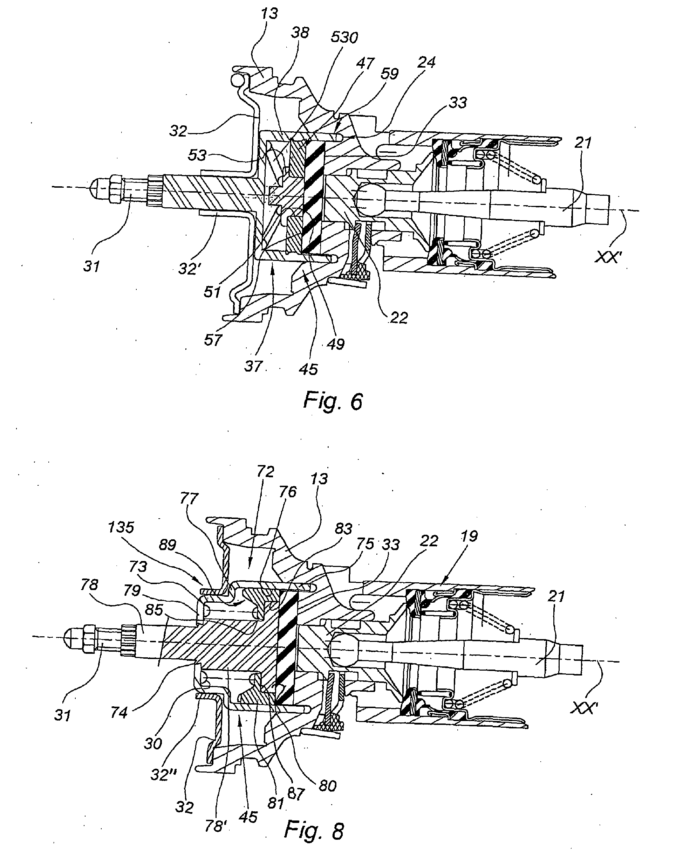

Sur la figure 6, on peut voir une troisième variante du premier mode de réalisation du dispositif de réaction selon la présente invention comportant un moyen élastique 530, des moyens de précontrainte 45 du moyen élastique 530 et un disque de réaction 33. Les moyens de précontrainte 45 comportent une cage 37 formée par un manchon 38 cylindrique d'axe XX' dont l'extrémité axiale avant forme embase d'une tige de poussée 31, par une rondelle annulaire 47 munie d'une ouverture centrale 51, et par une pièce flottante 49.

La rondelle annulaire 47 est montée fixe dans le manchon 38, avantageusement par sertissage sur la périphérie du manchon 38.

La pièce flottante 49 est montée, avantageusement de manière coaxiale au distributeur plongeur 22, en translation axiale dans l'ouverture 51 de la rondelle 47 et de diamètre extérieur égal au diamètre intérieur du passage 51.

La pièce flottante 49 comporte des moyens de retenue 53 situés à une distance non nulle des extrémités axiales de la pièce 49, formés par un collet 55 s'étendant radialement vers l'extérieur et de diamètre extérieur supérieur au diamètre intérieur de l'ouverture 51.

Le moyen élastique 530 est avantageusement un ressort conique de conicité orienté vers l'avant monté en compression entre la face arrière du fond avant de la cage 37 et la face annulaire avant du collet 55. Le disque de réaction est disposé en appui sur la face 57 formé par la face arrière de la rondelle annulaire 47 et par la face arrière de la pièce flottante 49.
Le dispositif de réaction comportent des moyens de guidage 59 par rapport au piston 13 susceptibles de coopérer avec les moyens de guidage 24 du piston pneumatique 13, formé par l'extrémité cylindrique arrière de la cage 37.

Le dispositif de réaction est fixé au piston pneumatique 13 au moyen d'une rondelle 32 annulaire dont le passage centrale s'étend avantageusement axialement vers l'avant sous forme d'un manchon bordant la tige de poussée 31.

Le fonctionnement du dispositif 135 appliqué à un servomoteur d'assistance au freinage selon la présente invention est analogue à celui du dispositif de réaction des figures 4 et 5.

Cette variante du premier mode de réalisation du dispositif de réaction selon la présent invention permet de manière avantageuse de réduire de façon considérable l'encombrement axial du dispositif de réaction.

Sur la figure 7, on peut voir une quatrième variante du premier mode réalisation du dispositif de réaction 35, sur laquelle le piston pneumatique 13 et le distributeur 22 sont représentés partiellement. Le dispositif 35 comporte un disque de réaction 33, des moyens de précontrainte 45 d'un moyen élastique 30 comprenant un manchon 60 muni d'un épaulement 61 intérieur, d'une pièce flottante 49 montée en translation dans le manchon 60 et de diamètre extérieur égal au diamètre intérieur du passage défini par l'épaulement 61, et d'un manchon 63. Le manchon 63 comporte une extrémité axiale avant obturée et formant un embase 64 d'une tige de poussée 31 venue de matière. Le manchon 63 pénètre dans le manchon 60 par son extrémité arrière et est fixé au manchon 60, par exemple à force ou par sertissage de manière à obturer l'extrémité avant ouverte du manchon 60.

Toutes les pièces du dispositif selon la figure 7 sont coaxiales à l'axe XX'.

La pièce flottante 49 comporte également des moyens de butée 53 formés par une surface annulaire 71 s'étendant radialement vers l'extérieur.

Le disque de réaction 33 est monté en appui du côté de l'extrémité arrière du manchon 60 contre la face arrière et un ressort 30 est monté en compression entre la face arrière de l'extrémité avant du manchon 63 et la face avant de la surface annulaire 71 des moyens de butée 53 de la pièce flottante 49.

Le manchon 60 comporte à son extrémité axial arrière des moyens de guidage 59 susceptibles de coopérer avec les moyens de guidage 24 formés dans la face avant du piston pneumatique 13.

Le dispositif 35 comporte également des moyens de guidage 59 par rapport au piston pneumatique 13 susceptibles de coopérer avec le moyens de guidage 24 du piston 13

Le fonctionnement du dispositif 35 de la figure 7 appliqué à un servomoteur d'assistance au freinage selon la présente invention est analogue à celui du dispositif 35 décrit sur les figures 5 et 6.

L'avantage de ce mode de réalisation est la simplicité de fabrication du dispositif de réaction selon la présente invention.

Sur la figure 8, on peut voir un deuxième mode de réalisation d'un dispositif de réaction 135 selon la présente invention comportant un disque de réaction 33, un moyen élastique 30 et des moyens de précontrainte d'un moyen élastique comprenant un manchon 72 muni à une première extrémité orientée vers l'avant d'une première partie 73 de plus petit diamètre et à une seconde extrémité orientée vers l'arrière d'une seconde partie 75 de plus grand diamètre, la première partie 73 est reliée à la seconde partie par un épaulement 77. La partie 73 de plus petit diamètre comporte à une extrémité orientée vers l'avant une surface annulaire 79 s'étendant vers l'intérieur et délimitant un passage 74.
La tige de poussée 31 comporte à une première extrémité orientée vers l'avant une première partie 78 de plus petite section, et à une seconde extrémité opposée à la première extrémité une seconde partie de plus grande section 78' formant une embase 80 de diamètre extérieur inférieur au diamètre intérieur de la seconde partie de plus grand diamètre 75, l'espace entre l'embase 80 et le manchon 75 définissant un passage annulaire 76. L a pièce 78 est fixée dans le passage 74, par exemple par accrochage à force.

Le dispositif 135 comporte également des moyens de guidage 54 par rapport au piston pneumatique 13 susceptibles de coopérer avec le moyens de guidage 24 du piston 13

Les moyens de précontrainte comportent également une bague annulaire 81 de diamètre extérieur sensiblement égal au diamètre intérieur de la partie 75 du manchon 72 montée à coulissement dans la partie 75, la bague 81 est percée vers l'arrière d'une premier alésage 83 de plus grand diamètre et vers l'avant d'un second alésage 85 de plus petit diamètre, les deux alésages 83, 85 étant reliés par un épaulement 87. Le diamètre intérieur de l'alésage 83 est sensiblement égal au diamètre extérieur de la partie 78' de la tige de poussée 3 1 et le diamètre intérieur de l'alésage 85 est sensiblement égal au diamètre extérieur de l'embase 80. La bague 81. comporte également une partie 89 à son extrémité avant de forme intérieure tronconique de conicité orientée vers l'avant. La bague 81 est montée coulissante dans la partie 75 du manchon et autour de la tige de poussée 21. Le moyen élastique 30, avantageusement un ressort cylindrique, est monté en compression entre la face arrière de la surface annulaire 79 et le fond de la partie 89.

Le disque de réaction 33 est monté en appui contre la surface formée par les faces arrières de l'embase 80 et de la bague 81.

Le dispositif de réaction est fixé au piston pneumatique 13 au moyen d'une rondelle 32 annulaire dont le passage centrale s'étend axialement vers l'avant sous forme d'un manchon 32" bordant la partie de plus petit diamètre 73 du manchon 72.

Nous allons maintenant décrire le fonctionnement du dispositif de réaction 135 selon la figure 8 intégré dans un servomoteur pneumatique d'assistance au freinage.

Lors du freinage, pour une valeur de force d'entrée inférieure à une certaine force Fe, le dispositif de réaction 135 se comporte comme une pièce rigide. Le disque de réaction joue un rôle connu, il compose les forces Fa, Fp et Fr, et transmet toute la réaction à la tige d'actionnement. Le dispositif de réaction détermine un premier rapport d'assistance.

Pour une valeur de force d'entrée supérieure à Fe, le ressort 30 se déforme, permettant à la bague 81 de coulisser vers l'avant et par conséquent au disque de réaction 33 de s'extruder vers l'avant dans la partie annulaire externe 76 définie par le diamètre extérieur de l'embase 80 et le diamètre intérieur de la partie 75 du manchon 72.

Il y alors une modification de la distribution des pressions de contact dans la surface du caoutchouc, ce qui réduit la pression de contact entre le distributeur 22 et le disque de réaction 33, le dispositif de réaction déterminant un second rapport d'assistance.

Pour une certaine force d'entrée, la bague 81 vient en appui contre l'épaulement 77, et le servomoteur fournit alors une niveau d'assistance égal au premier niveau d'assistance obtenu pour une force Fa inférieur à la précontrainte du ressort

A l'inverse des premiers mode de réalisation, l'extrusion du disque de réaction a lieu par une partie annulaire 76 externe et non par le passage central 51.

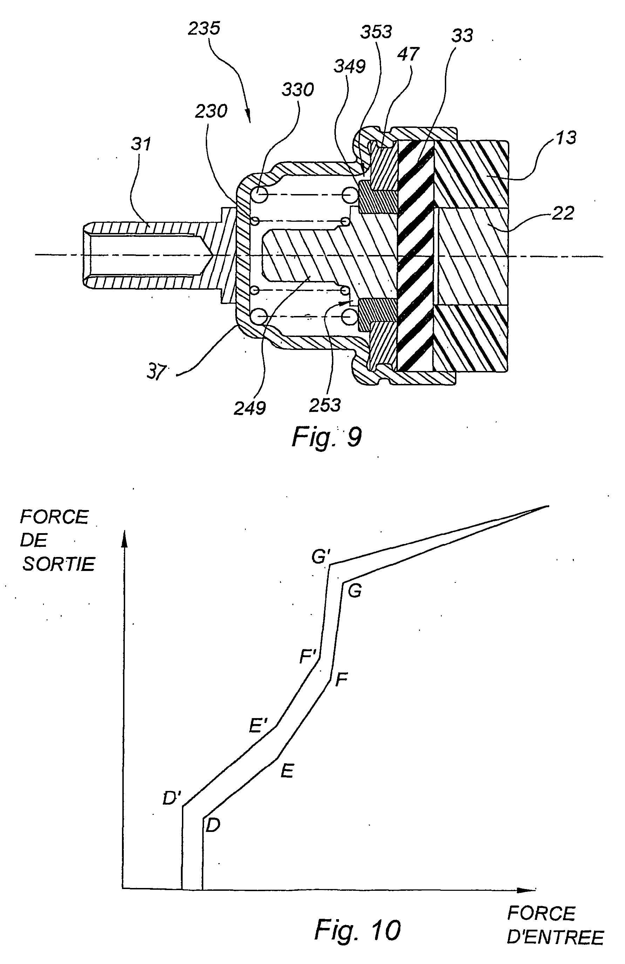

Sur la figure 9, on peut voir un troisième mode de réalisation d'un dispositif de réaction permettant de modifier plus d'une fois le rapport d'assistance du servomoteur et sur laquelle le piston pneumatique 13 et le distributeur 22 sont représentés partiellement.

Le dispositif de réaction 235 se différencie du dispositif de réaction 35 du premier mode de réalisation par le fait qu'il comporte une pièce flottante 49 composite comprenant une première pièce 249 centrale et une seconde pièce annulaire 349 coulissant autour de la première pièce 249. La première pièce 249 comporte des moyens de butée 253 en appui sur la face avant de la pièce 349 et la pièce avant comporte des moyens de butée 353 en appui contre la rondelle annulaire 47. Un premier ressort 230 est monté en compression entre la face arrière du fond de la cage 37 et les moyens de butée 253, un second ressort 330, de précontrainte supérieure à celle de premier ressort 230 est monté en compression entre la face arrière du fond de la cage 37 et les moyens de butée 353, le ressort 330 est de diamètre intérieur supérieur au diamètre extérieur du ressort 230.

Nous allons décrire le fonctionnement d'un servomoteur pneumatique d'assistance au freinage comportant le troisième mode de réalisation du dispositif de réaction selon la présente invention.

Sur la figure 10, on peut voir l'évolution des rapports d'assistance en fonction de la force d'actionnement pour le servomoteur comportant le dispositif selon le troisième mode de réalisation

Pour une valeur de force d'entrée inférieure à une certaine force Fe, le dispositif de réaction 235 se comporte comme une pièce rigide, le dispositif de réaction déterminant un premier rapport d'assistance représenté par la portion de courbe DE. Pour une valeur de force d'entrée supérieure à Fe et inférieure à une certaine force Fd, le ressort 230 se comprime, permettant au disque de réaction 33 de s'extruder par le passage central 51 par coulissement vers l'avant de la pièce flottante 249. Le dispositif de réaction détermine un second rapport d'assistance représenté par la portion de courbe EF. Pour une force d'entrée supérieure à Fd, le ressort 330 se comprime permettant au disque de réaction 33 de s'extruder axialement vers l'avant sur une surface annulaire par déplacement de la pièce annulaire 349, le dispositif de réaction détermine un troisième rapport d'assistance représenté par la portion de la courbe FG. Ensuite, pour des valeurs d'entrée encore plus élevées, l'extrémité avant de la pièce flottante 247 vient en appui contre la face arrière du fond de la cage 37 et l'on retrouve le premier rapport d'assistance DE. Le début de cette dernière étape apparaît en fonction des réglages du dispositif, le début peut se situer avant la zone de saturation ou dans la zone de saturation, la zone de saturation étant le moment où la pression régnant dans la chambre de travail atteint la pression atmosphérique, il n'y a alors plus d'assistance supplémentaire, toute augmentation de la force d'actionnement se traduit uniquement par une augmentation de la force de sortie de la valeur de la force d'actionnement.

Il est bien entendu que les moyens de précontrainte 45 d'au moins un moyen élastique 30, 230, 330 ne sont pas limités à une rondelle annulaire en appui sur un épaulement et fixée par sertissage, mais à tout moyen de blocage dans une position précise comme par exemple une rondelle et une vis.

Il est également bien entendu que l'on pourrait prévoir un dispositif permettant en premier lieu un déplacement de la bague annulaire et en second de la pièce flottante.

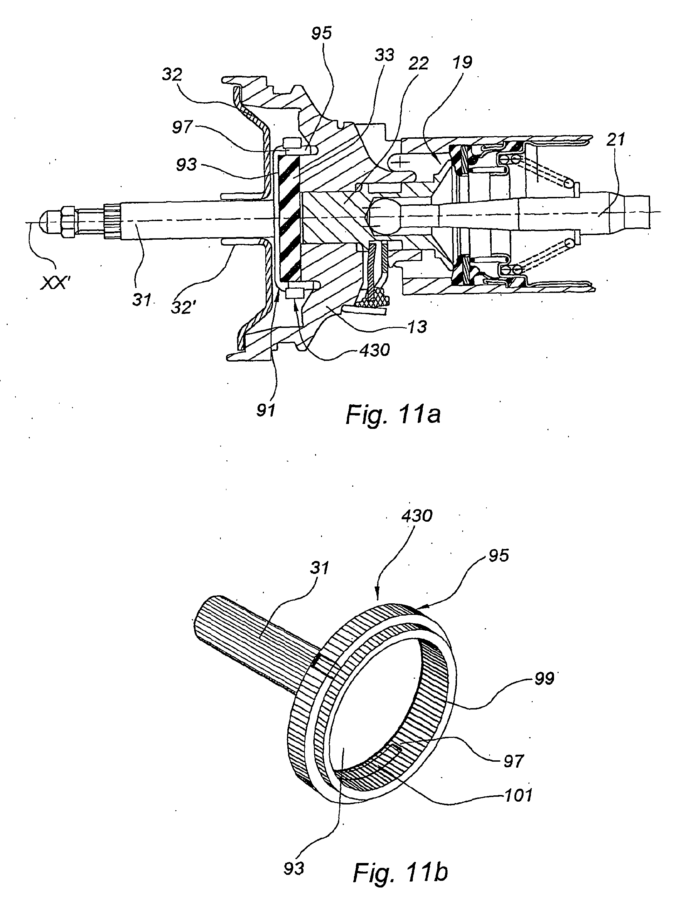

Sur les figures 11a et 11b, on peut voir un quatrième mode de réalisation du dispositif de réaction selon la présente invention permettant l'extension radiale du disque de réaction pour une force d'entrée supérieure à une force Fe. Le dispositif comporte un disque de réaction 33, un logement 91 du disque de réaction 33 et un moyen élastique 430.

Le logement 91 du disque de réaction est une coupelle de réception 91 solidarisée par sa face avant axiale à une tige de poussée 31 d'axe XX', la coupelle 91 étant coaxiale à la tige de poussée 31.

La coupelle 91 comporte une face avant 93 en forme de disque perpendiculaire à l'axe XX' prolongée axialement par un manchon 95 coaxial au disque 95, le manchon 95 comportant dans sa périphérie latérale des crevés 97 angulairement réparties, avantageusement régulièrement réparties et un moyen élastique 430 sous forme d'anneau élastique préchargé muni sur sa face intérieure 99 de languettes 101 en saillie coopérant avec les crevées 97.

Le dispositif de réaction est fixé au piston pneumatique 13 au moyen d'une rondelle 32 annulaire dont le passage centrale s'étend avantageusement axialement vers l'avant sous forme d'un manchon 32' bordant la tige de poussée 31.

Nous allons décrire le fonctionnement d'un servomoteur pneumatique d'assistance au freinage comportant le quatrième mode de réalisation du dispositif de réaction selon la présente invention.

Pour des forces d'entrée inférieure à une certaine valeur de force Fe, la coupelle se comporte comme une pièce rigide, le dispositif de réaction déterminant un premier rapport d'assistance.

Pour une force d'entrée supérieure à Fe, l'anneau se déforme permettant au disque de réaction 33 de s'extruder par les crevées 97. Il y alors modification de la distribution des pressions de contact dans la surface du caoutchouc, réduisant la pression de contact entre le distributeur 22 et le disque de réaction 33, le dispositif de réaction déterminant un second rapport d'assistance.

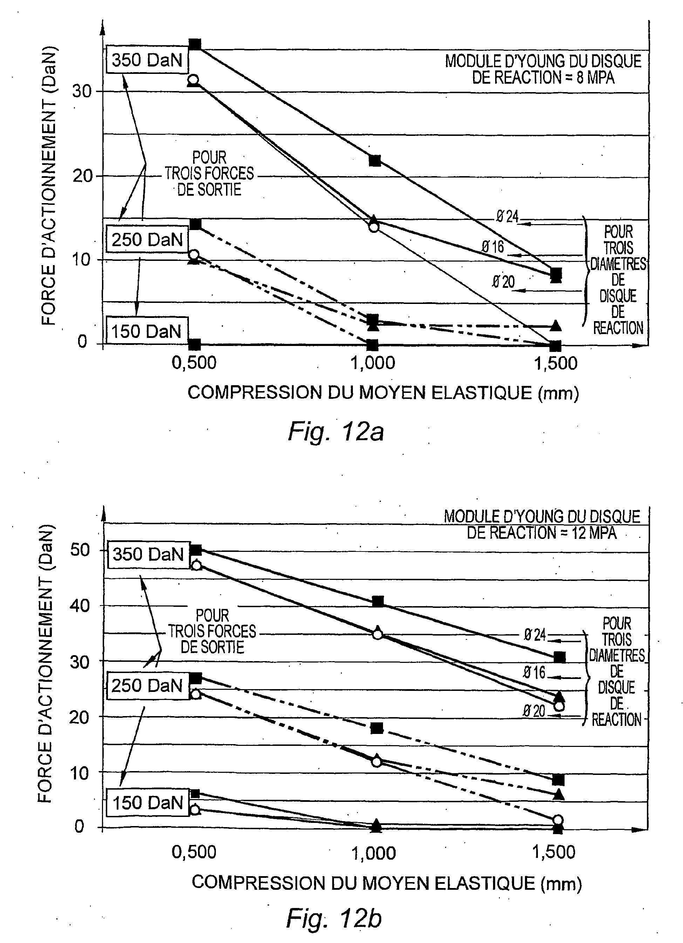

Sur les figures 12a et 12b, on peut voir l'évolution de la valeur de la force d'actionnemènt en fonction de la compression du moyen élastique 30, 230, 330, 430, 530.

Des mesures de force appliquée au distributeur en fonction de la compression du moyen élastique ont été réalisées en faisant varier la force de sortie, le module d'Young du disque de réaction 33 et le diamètre du disque de réaction 33. La force d'actionnement est directement proportionnelle à la force d'entrée sur la pédale de frein.

Ces caractéristiques montrent que lorsque le moyen élastique se comprime, la force d'actionnement diminue et par conséquent, à force de sortie constante le rapport d'assistance augmente.

Ceci prouve l'efficacité du dispositif de réaction selon la présente invention appliqué à une servomoteur pneumatique d'assistance au freinage à faire varier le rapport d'assistance du servomoteur, la variation du rapport d'assistance dépendant des caractéristiques du disque de réaction.

La précontrainte d'un moyen élastique est de préférence supérieure ou égale à 150 Newtons.

Il est bien entendu que la valeur de force Fe donnée comme valeur limite de la force d'entrée pour passer d'un premier rapport d'assistance à un second rapport d'assistance dépend des réglages des dispositifs, taille du disque de réaction, module d'Young du caoutchouc du disque de réaction et des moyens élastiques utilisés. Il en va de même pour la valeur de force Fd.

Il est également bien entendu que la présente invention ne se limite pas à un dispositif de réaction à deux ou trois rapport d'assistance différents mais au nombre nécessaire de rapports d'assistance successifs pour assurer un freinage efficace et confortable.

La présente invention s'applique notamment à l'industrie automobile.

La présente invention s'applique principalement à l'industrie du freinage.

## Revendications

1. Dispositif de réaction pour servomoteur d'assistance au freinage comportant un disque de réaction (33) disposé dans un logement de réception délimité à une première extrémité longitudinale par une première surface , à une seconde extrémité opposée à la première extrémité par une seconde surface radialement externe et une troisième surface délimitée par ladite deuxième surface, et par une quatrième surface radiale s'étendant axialement de la première surface à la seconde et troisième surfaces, ledit dispositif de réaction comportant également au moins un moyen élastique (30, 230, 330, 430, 530) susceptible d'être déformé et permettant une augmentation du volume disponible dudit disque de réaction (33) pour une force d'entrée supérieure à une certaine valeur de force (Fe), et **déterminant un premier rapport d'assistance pour une force d'entrée inférieure à la valeur prédéterminée (Fe) caractérisé en ce que** l'augmentation du volume disponible pour ledit disque de réaction (33) s'effectue dans un ensemble de la première et de la quatrième surfaces **et en ce que ledit dispositif de réaction détermine au moins un second rapport d'assistance pour une valeur de force d'entrée supérieure à la valeur prédéterminée (Fe).**

2. Dispositif de réaction selon la revendication 1 **caractérisé en ce que** la quatrième surface est au moins partiellement définie par une extrémité radiale de ladite tige de poussée (31).

3. Dispositif de réaction selon la revendication 1 ou 2 **caractérisé en ce que** la première surface est définie par une rondelle annulaire (47) et au moins une pièce flottante (49, 249, 349).

4. Dispositif de réaction selon la revendication 2 **caractérisé en ce que** la première surface est formée par une pièce solidaire d'une extrémité axiale de la tige de poussée (31).

5. Dispositif de réaction selon l'une quelconque des revendication de 1 à 4 **caractérisé en ce que** le moyen élastique (30, 230, 330, 430, 530) au nombre d'au moins un est précontraint de manière à assurer une rigidité du dispositif de réaction pour une force d'entrée inférieure à une certaine valeur de force (Fe).

6. Dispositif de réaction selon l'une quelconque des revendication de 1 à 5 **caractérisé en ce que** ledit dispositif de réaction assure une modification du rapport d'assistance en fonction de la valeur de la force d'entrée.

7. Dispositif de réaction selon la revendication 6 **caractérisé en ce que** ledit dispositif assure une augmentation du rapport d'assistance pour une valeur de force d'actionnement supérieure à une certaine valeur de force (Fe).

8. Dispositif de réaction selon l'une quelconque des revendications précédentes **caractérisé en ce** la précontraintes des moyens élastiques (30, 230, 330, 430, 530) est supérieure ou égale à 150 Newtons.

9. Dispositif de réaction selon l'une quelconque des revendications précédentes **caractérisé en ce que** le moyen élastique (30, 230, 330, 530) est un ressort.

10. Dispositif de réaction selon la revendication 9 **caractérisé en ce que** le moyen élastique (30, 230, 330) est un ressort cylindrique.

11. Dispositif de réaction selon la revendication 1, 2, 4, 5, 6, 7, ou 8 **caractérisé en ce que** le moyen élastique (430) est un anneau élastique.

12. Dispositif de réaction selon la revendication 9 **caractérisé en ce que** le moyen élastique (530) est un ressort conique

13. Dispositif de réaction selon la revendication 3 **caractérisé en ce que** la rondelle annulaire (47) et la pièce flottante (49) au nombre d'au moins une forment des moyens de précontrainte (45) du moyen élastique (30,230, 330, 530) au nombre d'au moins un.

14. Dispositif de réaction selon la revendication 3, 9, 10, 12 ou 13 **caractérisé en ce que** la rondelle annulaire (47) est sertie sur le corps de la tige de poussée (31).

15. Dispositif de réaction selon la revendication 3, 9, 10, 12, 13 ou 14 **caractérisé en ce que** la pièce flottante (49) comporte des moyens de centrage (54) du moyen élastique (30).

16. Dispositif de réaction selon la revendications 10, 13, 14 ou 15 **caractérisé en ce qu'**il comporte deux moyens élastiques coaxiaux (230, 330).

17. Dispositif de réaction selon la revendication 16 **caractérisé en ce que** le moyen élastique (230) a une précharge inférieure à la précharge du moyen élastique (330).

18. Dispositif de réaction selon la revendication 17 **caractérisé en ce que** la pièce flottante (49) comporte une première pièce centrale (249) et une seconde pièce annulaire (349) mobiles axialement l'un par rapport à l'autre.

19. Dispositif de réaction selon l'une quelconque des revendications précédentes **caractérisé en ce qu'**il comporte des moyens de guidage (59) susceptibles de coopérer avec des moyens de guidage (24) d'un servomoteur pneumatique d'assistance au freinage.

20. Servomoteur pneumatique d'assistance au freinage comportant une enveloppe (1) divisée en deux chambres (7, 9) par une paroi mobile étanche (11) comportant un piston pneumatique (13) dans lequel est disposé une valve trois voies (19) actionnée par une tige d'actionnement (21) susceptible d'être reliée à une première extrémité longitudinale à une pédale de frein et à une seconde extrémité longitudinale opposée à la première extrémité à un distributeur (22), **caractérisé en ce** le servomoteur comprend un dispositit de réaction selon l'une quelconque des revendications précédentes et en ce que le distributeur (22) est susceptible de venir en contact avec le dispositif de réaction.

21. Servomoteur pneumatique d'assistance au freinage selon la revendication 20 **caractérisé en ce que** ledit dispositif de réaction selon les revendications de 1 à 19 est fixé au piston pneumatique (13) au moyen d'une rondelle (32).

22. Servomoteur pneumatique d'assistance au freinage selon la revendication 21 **caractérisé en ce que** la rondelle (32) est fixée par pincement entre un ressort de rappel (18) et le piston pneumatique (13).

23. Servomoteur pneumatique d'assistance au freinage selon l'un quelconque des revendications 20 à 22 **caractérisé en ce que** le piston pneumatique (13) comporte des moyens de guidage (24) coopérant avec des moyens de guidages (59) du dispositif de réaction selon la revendication 19.

## Claims

1. Reaction device for a brake booster comprising a reaction disc (33) arranged in a receiving housing delimited at a first longitudinal end by a first surface, at a second end opposite the first end, by a second radially external surface and a third surface delimited by the said second surface, and by a fourth radial surface extending axially from the first surface to the second and third surfaces, the said reaction device also comprising at least one elastic means (30, 230, 330, 430, 530) which can be deformed and which allows the available volume of the said reaction disc (33) to increase for an input force above a certain force value (Fe), and determining a first boost ratio for an input force below the predetermined value (Fe), **characterized in that** the increase in the volume available for the said reaction disc (33) takes place in a collection of the first and of the fourth surfaces and **in that** the said reaction device determines at least a second boost ratio for an input force value higher than the predetermined value (Fe).

2. Reaction device according to Claim 1, **characterized in that** the fourth surface is at least partially defined by a radial end of the said push rod (31).

3. Reaction device according to Claim 1 or 2, **characterized in that** the first surface is defined by an annular washer (47) and at least one floating piece (49, 249, 349).

4. Reaction device according to Claim 2, **characterized in that** the first surface is formed by a piece secured to one axial end of the push rod (31).

5. Reaction device according to any one of Claims 1 to 4, **characterized in that** the elastic means (30, 230, 330, 430, 530) of which there is at least one, is prestressed so as to provide the reaction device with rigidity for an input force below a certain force value (Fe).

6. Reaction device according to any one of Claims 1 to 5, **characterized in that** the said reaction device changes the boost ratio according to the value of the input force.

7. Reaction device according to Claim 6, **characterized in that** the said device increases the boost ratio for an actuating force value higher than a certain force value (Fe).

8. Reaction device according to any one of the preceding claims, **characterized in that** the prestress of the elastic means (30, 230, 330, 430, 530) is greater than or equal to 150 newtons.

9. Reaction device according to any one of the preceding claims, **characterized in that** the elastic means (30, 230, 330, 530) is a spring.

10. Reaction device according to Claim 9, **characterized in that** the elastic means (30, 230, 330) is a cylindrical spring.

11. Reaction device according to Claim 1, 2, 5, 6, 7 or 8, **characterized in that** the elastic means (430) is an elastic ring.

12. Reaction device according to Claim 9, **characterized in that** the elastic means (530) is a conical spring.

13. Reaction device according to Claim 3, **characterized in that** the annular washer (47) and the floating piece (49) of which there are at least one, form means (45) of prestressing the elastic means (30, 230, 330, 530) of which there is at least one.

14. Reaction device according to Claim 3, 9, 10, 12 or 13, **characterized in that** the annular washer (47) is crimped onto the body of the push rod (31).

15. Reaction device according to Claim 3, 9, 10, 12, 13 or 14, **characterized in that** the floating piece (49) comprises means (54) of centring the elastic means (30).

16. Reaction device according to Claims 10, 13, 14 or 15, **characterized in that** it comprises at least two coaxial elastic means (230, 330).

17. Reaction device according to Claim 16, **characterized in that** the elastic means (230) has a preload lower than the preload of the elastic means (330).

18. Reaction device according to Claim 17, **characterized in that** the floating piece (49) comprises a central first piece (249) and an annular second piece (349) which can move axially one with respect to the other.

19. Reaction device according to any one of the preceding claims, **characterized in that** it comprises guide means (59) capable of collaborating with guide means (24) of a pneumatic brake booster.

20. Pneumatic brake booster comprising a casing (1) divided into two chambers (7, 9) by a sealed moving wall (11) comprising a pneumatic piston (13) in which there is arranged a three-way valve (19) actuated by an actuating rod (21) which can be connected at a first longitudinal end to a brake pedal and at a second longitudinal end opposite the first end to a distributor (22), **characterized in that** the booster comprises a reaction device according to any one of the preceding claims and **in that** the distributor (22) is able to come into contact with a reaction device.

21. Pneumatic brake booster according to Claim 20, **characterized in that** the said reaction device according to Claims 1 to 19 is fixed to the pneumatic piston (13) by means of a washer (32).

22. Pneumatic brake booster according to Claim 21, **characterized in that** the washer (32) is fixed by being trapped between a return spring (18) and the pneumatic piston (13).

23. Pneumatic brake booster according to any one of Claims 20 to 22, **characterized in that** the pneumatic piston (13) comprises guide means (24) collaborating with guide means (59) of the reaction device according to Claim 19.

## Patentansprüche

1. Reaktionsvorrichtung für einen Servomotor zur Bremsunterstützung, mit einer Reaktionsscheibe (33), die in einem Aufnahmesitz angeordnet ist, der an einem ersten Längsende durch eine erste Fläche und an einem zweiten, dem ersten Ende entgegengesetzten Ende durch eine zweite, radial äußere Fläche und eine dritte, durch die zweite Fläche begrenzte Fläche und durch eine vierte, radiale Fläche begrenzt ist, welche sich axial von der ersten Fläche zur zweiten und dritten Fläche erstreckt, wobei die Reaktionsvorrichtung auch mindestens ein elastisches Mittel (30, 230, 330, 430, 530) aufweist, das verformt werden kann und eine Erhöhung des verfügbaren Volumens der Reaktionsscheibe (33) bei einer Eingangskraft ermöglicht, die über einem bestimmten Kraftwert (Fe) liegt, und das ein erstes Unterstützungsverhältnis für eine Eingangskraft bestimmt, die unter dem vorbestimmten Wert (Fe) liegt, **dadurch gekennzeichnet, dass** die Erhöhung des verfügbaren Volumens für die Reaktionsscheibe (33) in einer Einheit erfolgt, die aus der ersten und der vierten Fläche besteht, und dass die Reaktionsvorrichtung mindestens ein zweites Unterstützungsverhältnis für einen Eingangskraftwert bestimmt, der über dem vorbestimmten Wert (Fe) liegt.

2. Reaktionsvorrichtung nach Anspruch 1, **dadurch gekennzeichnet, dass** die vierte Fläche zumindest teilweise durch ein radiales Ende der Schubstange (31) definiert ist.

3. Reaktionsvorrichtung nach Anspruch 1 oder 2, **dadurch gekennzeichnet, dass** die erste Fläche durch eine Ringscheibe (47) und mindestens ein schwimmendes Teil (49, 249, 349) definiert ist.

4. Reaktionsvorrichtung nach Anspruch 2, **dadurch gekennzeichnet, dass** die erste Fläche durch ein Teil gebildet ist, das mit einem axialen Ende der Schubstange (31) fest verbunden ist.

5. Reaktionsvorrichtung nach einem der Ansprüche 1 bis 4, **dadurch gekennzeichnet, dass** das mindestens eine elastische Mittel (30, 230, 330, 430, 530) so vorgespannt ist, dass eine Steifigkeit der Reaktionsvorrichtung bei einer Eingangskraft gewährleistet ist, die unter einem bestimmten Kraftwert (Fe) liegt.

6. Reaktionsvorrichtung nach einem der Ansprüche 1 bis 5, **dadurch gekennzeichnet, dass** die Reaktionsvorrichtung eine Änderung des Unterstützungsverhältnisses in Abhängigkeit vom Wert der Eingangskraft gewährleistet.

7. Reaktionsvorrichtung nach Anspruch 6, **dadurch gekennzeichnet, dass** die Vorrichtung eine Erhöhung des Unterstützungsverhältnisses bei einem Wert einer Betätigungskraft gewährleistet, der über einem bestimmten Kraftwert (Fe) liegt.

8. Reaktionsvorrichtung nach einem der vorhergehenden Ansprüche, **dadurch gekennzeichnet, dass** die Vorspannung der elastischen Mittel (30, 230, 330, 430, 530) größer oder gleich 150 Newton ist.

9. Reaktionsvorrichtung nach einem der vorhergehenden Ansprüche, **dadurch gekennzeichnet, dass** das elastische Mittel (30, 230, 330, 530) eine Feder ist.

10. Reaktionsvorrichtung nach Anspruch 9, **dadurch gekennzeichnet, dass** das elastische Mittel (30, 230, 330) eine zylindrische Feder ist.

11. Reaktionsvorrichtung nach Anspruch 1, 2, 4, 5, 6, 7 oder 8, **dadurch gekennzeichnet, dass** das elastische Mittel (430) ein elastischer Ring ist.

12. Reaktionsvorrichtung nach Anspruch 9, **dadurch gekennzeichnet, dass** das elastische Mittel (530) eine konische Feder ist.

13. Reaktionsvorrichtung nach Anspruch 3, **dadurch gekennzeichnet, dass** die Ringscheibe (47) und das mindestens eine schwimmende Teil (49) Mittel (45) zum Vorspannen des mindestens einen elastischen Mittels (30, 230, 330, 530) bilden.

14. Reaktionsvorrichtung nach Anspruch 3, 9, 10, 12 oder 13, **dadurch gekennzeichnet, dass** die Ringscheibe (47) auf den Körper der Schubstange (31) verstemmt ist.

15. Reaktionsvorrichtung nach Anspruch 3, 9, 10, 12, 13 oder 14, **dadurch gekennzeichnet, dass** das schwimmende Teil (49) Mittel (54) zur Zentrierung des elastischen Mittels (30) aufweist.

16. Reaktionsvorrichtung nach Anspruch 10, 13, 14 oder 15, **dadurch gekennzeichnet, dass** sie zwei koaxiale elastische Mittel (230, 330) aufweist.

17. Reaktionsvorrichtung nach Anspruch 16, **dadurch gekennzeichnet, dass** das elastische Mittel (230) eine Vorspannung hat, die geringer ist als die Vorspannung des elastischen Mittels (330).

18. Reaktionsvorrichtung nach Anspruch 17, **dadurch gekennzeichnet, dass** das schwimmende Teil (49) ein erstes, mittleres Teil (249) und ein zweites, ringförmiges Teil (349) aufweist, die zueinander axial beweglich sind.

19. Reaktionsvorrichtung nach einem der vorhergehenden Ansprüche, **dadurch gekennzeichnet, dass** sie Führungsmittel (59) aufweist, die mit Führungsmitteln (24) eines pneumatischen Servomotors zur Bremsunterstützung zusammenwirken können.

20. Pneumatischer Servomotor zur Bremsunterstützung, mit einem Gehäuse (1), das durch eine dichte bewegliche Wand (11) in zwei Kammern (7, 9) unterteilt ist und einen pneumatischen Kolben (13) aufweist, in dem ein Dreiwegeventil (19) angeordnet ist, das durch eine Betätigungsstange (21) betätigt wird, die an einem ersten Längsende mit einem Bremspedal und an einem zweiten, dem ersten Ende entgegengesetzten Längsende mit einem Verteiler (22) verbunden sein kann, **dadurch gekennzeichnet, dass** der Servomotor eine Reaktionsvorrichtung nach einem der vorhergehenden Ansprüche aufweist und der Verteiler (22) mit der Reaktionsvorrichtung in Kontakt gelangen kann.

21. Pneumatischer Servomotor zur Bremsunterstützung nach Anspruch 20, **dadurch gekennzeichnet, dass** die Reaktionsvorrichtung nach den Ansprüchen 1 bis 19 mittels einer Scheibe (32) am pneumatischen Kolben (13) befestigt ist.

22. Pneumatischer Servomotor zur Bremsunterstützung nach Anspruch 21, **dadurch gekennzeichnet, dass** die Scheibe (32) durch Klemmen zwischen einer Rückstellfeder (18) und dem pneumatischen Kolben (13) befestigt ist.

23. Pneumatischer Servomotor zur Bremsunterstützung nach einem der Ansprüche 20 bis 22, **dadurch gekennzeichnet, dass** der pneumatische Kolben (13) Führungsmittel (24) aufweist, die mit Führungsmitteln (59) der Reaktionsvorrichtung nach Anspruch 19 zusammenwirken.
